# EUROPEAN PATENT APPLICATION

(11) **EP 4 838 801 A1**
(43) Date of publication of application: **11.11.2026**
(21) Application number: 24923249.7
(22) Date of filing: 15.08.2024
(51) Int. Cl.: H04B 7/06

(54) **CHANNEL INFORMATION FEEDBACK METHOD, TERMINAL, MEDIUM, AND PROGRAM PRODUCT**

(30) Priority: 07.02.2024 CN 202410174489
(71) Applicant: ZTE Corporation, Shenzhen, Guangdong 518057 (CN)
(72) Inventor: YANG, Jun, Shenzhen, Guangdong 518057 (CN); CHEN, Yijian, Shenzhen, Guangdong 518057 (CN); LU, Guangyan, Shenzhen, Guangdong 518057 (CN); ZHANG, Shujuan, Shenzhen, Guangdong 518057 (CN)
(74) Representative: Savi, Massimiliano
(86) International application number: PCT/CN2024/112369
(87) International publication number: WO 2025/167039

(57) **Abstract**

Embodiments of the present application provide a channel information feedback method, a terminal, a medium, and a program product. The method comprises: on the basis of a measurement result of a reference signal, determining a codeword group for configuring a sub-band; on the basis of the codeword group of the sub-band, determining a codeword group for configuring at least another sub-band; and sending feedback information, so that a base station establishes communication with a terminal on the basis of the feedback information.

## Description

### CROSS-REFERENCE TO RELATED APPLICATION

This application claims the benefit of priority to Chinese Patent Application No. 202410174489.8, filed on February 7, 2024, the entire contents of which are incorporated herein by reference in its entirety.

### TECHNICAL FIELD

The embodiments of the present disclosure relate to the field of wireless communication technologies, and in particular, to a channel information feedback method, a terminal device, a storage medium, and a computer program product.

### BACKGROUND

Multiple Input Multiple Output (MIMO) technology is a key physical layer technology in fourth-generation (4G) and fifth-generation (5G) mobile communications. It enables higher spatial multiplexing and spectral efficiency, further enhancing cell capacity.

Ultra-massive MIMO represents the further advancement of MIMO technology. By employing larger-scale antenna arrays, ultra-massive MIMO achieves higher spatial multiplexing gains and more precise beamforming, thereby further improving system capacity and spectral efficiency, making it applicable to future wireless communication systems.

However, ultra-massive MIMO typically involves higher channel dimensions and is applied to wireless communications with larger bandwidths, consequently requiring more channel state feedback resources, which leads to increased feedback overhead. Therefore, how to reduce the feedback overhead in high-frequency large-bandwidth and ultra-massive MIMO systems is currently a pressing issue which needs to be addressed.

### SUMMARY

The embodiments of the present disclosure provide a channel information feedback method, a terminal device, a storage medium, and a computer program product, aiming to design appropriate channel feedback methods and devices/terminal devices to achieve communication technologies with lower feedback overhead.

In a first aspect according to an embodiment of the present disclosure, a channel information feedback method is provided. The method includes: receiving a reference signal; measuring the reference signal to obtain channel state information; determining, based on the channel state information, a first codeword group from a codebook for configuring a sub-band; determining, based on the first codeword group, a second codeword group for configuring at least another sub-band; selecting a codeword corresponding to each sub-band from the codeword group corresponding to the respective sub-band; and sending feedback information, where the feedback information includes at least codeword indication information corresponding to codewords of one sub-band.

In a second aspect according to an embodiment of the present disclosure, a terminal device is further provided. The terminal device includes at least one processor; and at least one memory, configured to store at least one program; where the channel information feedback method according to the first aspect is implemented when the at least one program is executed by the at least one processor.

In a third aspect according to an embodiment of the present disclosure, a computer-readable storage medium is further provided, on which processor-executable programs are stored, and the channel information feedback method according to the first aspect is implemented when the processor-executable programs are executed by a processor.

In a fourth aspect according to an embodiment of the present disclosure, a computer program product is further provided, including computer programs or computer instructions, where the computer programs or the computer instructions are stored in a computer-readable storage medium, a processor of a computer device reads the computer programs or the computer instructions from the computer-readable storage medium, and the processor executes the computer programs or the computer instructions, causing the computer device to perform the channel information feedback method according to the first aspect.

According to the channel information feedback method, terminal device, storage medium, and computer program product provided by the embodiments of the present disclosure, determining another codeword group from one codeword group in the codebook, not only can the impact of dispersion be reduced, but feedback overhead can also be reduced.

### BRIEF DESCRIPTION OF THE DRAWINGS

FIG. 1 is a schematic diagram of an exemplary MIMO system in the existing technology.
FIG. 2 is a schematic diagram of a communication system suitable for MIMO technology according to embodiments of the present disclosure.
FIG. 3 is a flowchart of a channel information feedback method according to an embodiment of the present disclosure.
FIG. 4 is a flowchart of a channel information feedback method according to an embodiment of the present disclosure.
FIG. 5 is a flowchart of a channel information feedback method according to an embodiment of the present disclosure.
FIG. 6 is a schematic diagram illustrating the relationship between sub-bands and codeword groups according to an embodiment of the present disclosure.
FIG. 7 is a schematic diagram illustrating a terminal device according to an embodiment of the present disclosure.

### DETAILED DESCRIPTION

In order to make the object, technical schemes and advantages of the present disclosure clearer, the present disclosure is further described in detail below in conjunction with the accompanying drawings and specific embodiments. It should be understood that the specific embodiments described herein are only intended to explain the present disclosure and are not intended to limit the present disclosure.

It should be noted that although functional modules are divided in the schematic diagram of devices and a logical sequence is shown in the flowchart, in some cases, the steps shown or described may be performed in an order different from that set forth in the flowcharts, or implemented in a manner different from the module division in the devices. The terms "first", "second", etc., in the description, claims and drawings of the present disclosure, are used to distinguish similar objects, and are not necessarily used to describe a particular order.

The terms such as "dispose", "install" and "connect" in the description of the embodiments of the present disclosure should be interpreted broadly. Those skilled in the art can reasonably determine the specific meanings of these terms in the embodiments of the present disclosure based on the specific content of the technical scheme.

In the embodiments of the present disclosure, terms such as "further", "exemplarily", or "optionally" are used to indicate examples, illustrations, or explanations and should not be construed as being more preferable or advantageous over other embodiments or design schemes. The use of terms such as "further," "for example," or "optionally" is intended to present related concepts in a specific manner.

The base station side device in the embodiments of the present disclosure may be an evolved NodeB (eNB), a Transmission Reception Point (TRP), a next-generation NodeB (gNB) in a New Radio (NR) system, a base station in other future mobile communication systems, or an access node in a Wireless Fidelity (WiFi) system, among others. The embodiments of the present disclosure do not limit the specific technology or the specific device form adopted by the network device.

The user equipment or user terminal in the embodiments of the present disclosure refers to an entity on the user side for receiving or transmitting signals, such as a mobile phone. The terminal-side device may also be referred to as a terminal device, user equipment (UE), mobile station (MS), mobile terminal device (MT), etc. A terminal device may be a vehicle with communication capabilities, a smart vehicle, a mobile phone, a wearable device, a tablet (Pad), a computer with wireless transceiver functions, a virtual reality (VR) terminal device, an augmented reality (AR) terminal device, a wireless terminal device in industrial control, a wireless terminal device in self-driving applications, a wireless terminal device in remote medical surgery, a wireless terminal device in smart grid systems, a wireless terminal device in transportation safety, a wireless terminal device in smart city applications, a wireless terminal device in smart home systems, and the like. The embodiments of the present disclosure do not limit the specific technology or the specific device form adopted by the terminal device.

Multiple Input Multiple Output (MIMO) technology is a key physical layer technology in fourth-generation (4G) and fifth-generation (5G) mobile communications, utilizing multiple antennas at both the transmitter and receiver to significantly enhance channel capacity.

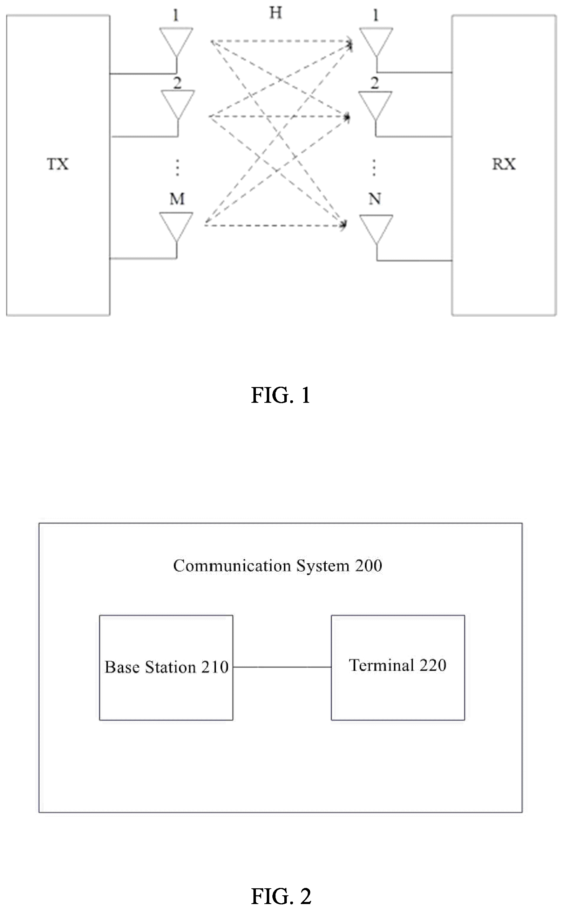

FIG. 1 is a schematic diagram of an exemplary MIMO system in the existing technology. As shown in FIG. 1, the transmitter TX and the receiver RX are equipped with M transmitting antenna units and N receiving antenna units, respectively, forming the transceiver channel H. Compared to traditional antenna systems, MIMO technology enables higher spatial multiplexing and spectral efficiency, further enhancing cell capacity.

MIMO technology relies on channel information for beamforming, which is used to focus signals in specific directions to increase signal strength and quality. To achieve beamforming, both the transmitter and receiver need to understand the Channel State Information (CSI), which refers to the channel characteristics between the transmitting and receivers. Before communication, the receiver can acquire channel information by measuring pilot signals. Pilot signals are typically transmitted as part of reference signals (such as CSI-RS), and the receiver utilizes them to estimate parameters such as channel fading, amplitude, and phase. The receiver can obtain information about the channel state by measuring and processing the pilot signals. Downlink channel information is obtained by the terminal device through measuring downlink reference signals and fed back to the base station, for example, in the form of Precoding Matrix Indicator (PMI) to report the optimal codeword to the base station, which then configures downlink precoding for information transmission accordingly. Based on the received PMI, the base station configures the downlink precoding matrix to use the optimal precoding matrix for information transmission on the downlink, thereby maximizing the utilization of channel characteristics and enhancing system performance and capacity.

Ultra-massive MIMO represents the further advancement of MIMO technology. By employing larger-scale antenna arrays, ultra-massive MIMO achieves higher spatial multiplexing gains and more precise beamforming, thereby further improving system capacity and spectral efficiency.

However, ultra-massive MIMO arrays can exacerbate the beam dispersion effect. When the same precoding is applied across the entire signal bandwidth, the beam directions for different sub-carriers may deviate, and the increase in transmission bandwidth can further amplify the impact of dispersion. High-frequency wireless communication features larger bandwidths. If the number of sub-bands across the full bandwidth remains unchanged, the bandwidth of each sub-band will increase. If the same channel feedback is still used within a sub-band, performance may degrade due to the influence of dispersion.

In existing technologies, the above issues can be mitigated by increasing the number of sub-bands across the full bandwidth. However, a greater number of sub-bands requires more time-frequency resources for feedback of channel state information, leading to an increase in feedback overhead.

Based on this, the present disclosure provides a channel information feedback method, terminal device, medium, and program product. An embodiment of the present disclosure provides a channel information feedback method. The method includes: determining a codeword group, i.e. a codeword set, for configuring a sub-band based on a measurement result of a reference signal; determining a codeword group for configuring at least another sub-band based on the codeword group of the previous sub-band; and sending feedback information so that a base station establishes communication with the terminal device based on the feedback information. By establishing relationships among codeword groups, not only can the impact of dispersion effects be reduced and the feedback overhead in the channel information feedback process be lowered, but the difficulty of searching for codewords can also be decreased.

The technical scheme of the present disclosure is applicable to various communication systems. Therefore, the following description is not limited to any specific communication system. For example, fifth-generation (5G) systems, sixth-generation (6G) systems, New Radio (NR), and so on. In particular, it applies to scenarios where obtaining channel information between the transmitter (TX) and the receiver (RX) is required prior to communication. To facilitate understanding of the technical schemes of the present disclosure, the following elaborates on the channel information feedback method, terminal device, storage medium, and computer program product, using an application scenario of the technical schemes of the present disclosure.

FIG. 2 is a schematic diagram of a communication system suitable for MIMO technology according to embodiments of the present disclosure. As shown in FIG. 2, the communication system 200 includes a terminal-side device, such as a smart terminal 210, and a base station-side device, such as a transmitting base station 220.

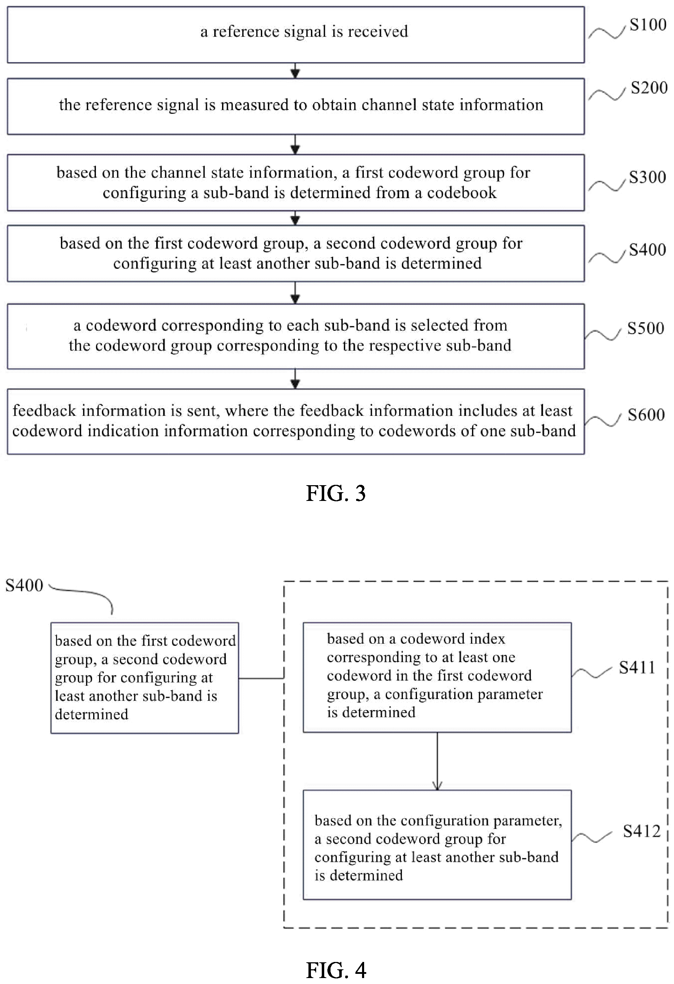

FIG. 3 is a flowchart of a channel information feedback method according to an embodiment of the present disclosure. As shown in FIG. 3, the channel information feedback method may be performed by the terminal 210. The steps of the channel information feedback method may include, but are not limited to, steps S100, S200, S300, S400, S500, and S600.

At step S100, a reference signal is received.

In an embodiment, the reference signal is a Channel State Information Reference Signal (CSI-RS).

CSI-RS serves as a reference signal for channel estimation. A terminal device can use CSI-RS to estimate parameters such as channel fading, amplitude, and phase, thereby facilitating effective signal detection and decoding. CSI-RS is typically distributed within the system bandwidth with specific time slots and frequency-domain resources, and is transmitted periodically according to requirements. CSI-RS can be used to assist user equipment (UE), such as a terminal device, in feeding back channel state information to the base station, enabling the base station to perform adaptive transmission for the downlink.

In another embodiment, the reference signal is a Synchronization Signal (SS). The SS serves as a reference signal for clock synchronization and system positioning, assisting the receiver in time and frequency synchronization, as well as determining the location of the base station. Synchronization signals are typically distributed within the system bandwidth with specific time slots and frequency domain resources, and are transmitted at fixed intervals. The receiver restores clock counting and system positioning information by detecting and decoding the synchronization signals, thereby achieving synchronization with the base station.

The reference signal may also be one or more of the following: Cell-specific Reference Signal (CRS), Demodulation Reference Signal (DMRS), Positioning Reference Signal (PRS), etc. CRS is used as a common reference signal for all user equipment within the cell. DMRS is specifically used as a reference signal for a certain particular user equipment, used for demodulating the data of that user equipment. PRS is used as a reference signal for supporting user equipment positioning. It is sent at specific time and frequency resources with higher transmission power, enabling the user equipment to accurately measure its location information.

At step S200, the reference signal is measured to obtain channel state information (CSI).

In an embodiment, CSI may include one or more of the following: Channel Quality Indicator (CQI), Precoding Matrix Indicator (PMI), CSI-RS Resource Indicator (CRI), SS/PBCH Block Resource Indicator (SSBRI), Layer Indicator (LI), Rank Indicator (RI), Layer 1 Reference Signal Received Power (L1-RSRP), or Layer 1 Signal-to-Interference-plus-Noise Ratio (L1-SINR).

The CQI is an indicator measured by the UE and reported to the base station, used to reflect the quality of the downlink channel and assist the base station in determining an appropriate Modulation and Coding Scheme (MCS) to adapt to current channel conditions. PMI can indicate the precoding matrix which the UE suggests the base station to use. Precoding is typically obtained by the transmitter, such as the base station, processing signals, which can improve signal quality at the receiver and reduce interference. LI can indicate the number of layers used in actual transmission. It is related to RI but not necessarily equal, as the actual number of layers may be constrained by other factors. RI represents the rank of the channel matrix, and is used for reflecting the maximum number of spatial multiplexing layers or data streams which can be supported under current channel conditions.

In an embodiment, the reference signal at the receiver can be expressed as follows: $y = Hx + n$ where x is the reference signal, H is the channel matrix, n is the noise term, and y is the received vector.

At step S300, based on the channel state information, a first codeword group for configuring a sub-band is determined from a codebook.

In an embodiment, a segment of communication bandwidth can be divided into multiple sub-bands, each sub-band can be configured with a codeword group. For sub-carriers in the sub-band, codewords can only be selected from said codeword group for feedback. Limiting the codeword selection range, i.e., configuring a corresponding codeword group for each sub-band, can reduce the codeword search space of the sub-band and improve feedback efficiency. A sub-band can be a bandwidth part (BWP), a resource block (RB) set within a BWP, a sub-carrier set within a BWP, or a specified segment of communication bandwidth within a BWP.

To accomplish channel estimation, the receiver can design a reception processing matrix W to process the vector y, that is, $y ′ = Wy$

In an embodiment, W is obtained by employing one of the methods: MMSE, LMMSE, or maximum likelihood estimation. Based on the processed received vector y', the channel matrix H can be determined, and subsequently, a codeword group or codeword set for configuring at least one sub-band can be determined. Once the codeword set for configuring one sub-band is determined, only codewords from the determined codeword group can be selected for the sub-carriers within that sub-band for beamforming configuration.

In an embodiment, a channel matrix H may be obtained based on a received reference signal, and a first codeword group for configuring the first sub-band is determined according to the channel matrix H. After the first codeword group is determined, codewords in the first sub-band can only be selected from the first codeword group.

The received reference signal is typically a known signal sequence. The receiver compares the received reference signal with the known transmitted signal and performs channel estimation through signal processing algorithms. Through channel estimation, the receiver obtains channel state information, which reflects the characteristics of the channel. Based on the channel characteristics reflected by the channel state information, a candidate codeword set most relevant to these channel characteristics is selected from the codebook. The relevance can be understood as that when the codewords from this set are used to configure downlink transmission, the receiver can achieve better reception gain, signal-to-noise ratio, or higher transmission rate.

A codebook is a set which contains multiple codewords. The codewords can be used to configure the precoding of a MIMO array to achieve specific beamforming effects, such as forming a directional beam for the transmitted signal.

The codebook can be a predefined precoding matrix set based on system requirements and communication standards, where each precoding matrix corresponds to a codeword used for multi-antenna transmission in wireless communication systems. It provides a variety of precoding matrix options to adapt to different channel conditions and transmission needs.

At step S400, based on the first codeword group, a second codeword group for configuring at least another sub-band is determined.

In an embodiment, the second codeword group of the second sub-band can be configured based on the first codeword group of the first sub-band.

Assuming the first codeword group corresponding to the first sub-band S₁ is C₁, the second codeword group C₂ corresponding to the second sub-band S₂ can be determined based on C₁. The correspondence means that the codeword used for sub-band S₁ can only be selected from codeword group C₁, and the codeword used for the second sub-band S₂ can only be selected from the second codeword group C₂.

In an embodiment, a second codeword group for configuring at least another sub-band can be determined based on a codeword index corresponding to at least one codeword in the first codeword group.

Assume a codeword W₁ in the first codeword group C₁ of the first sub-band S₁. The index of codeword W₁ is {i₁, i₂}. Then the second codeword group C₂ of the second sub-band S₂ can be determined based on the index {i₁, i₂} of codeword W₁.

In another embodiment, a mapping relationship between the codeword index corresponding to the at least one codeword in the first codeword group and each codeword index in the second codeword group can be established, thereby determining the second codeword group for configuring the at least another sub-band.

The establishment of the specific mapping relationship may vary and can include fixed mapping relationships, flexibly configurable mapping relationships, among others. This embodiment may encompass various implementations capable of determining the second codeword group C₂ for the second sub-band S₂ through the index {i₁, i₂} of M₁, which are not limited herein.

In an embodiment, the first codeword group can include codeword sub-groups. A second codeword group for configuring at least another sub-band can be determined based on a codeword sub-group index corresponding to the codeword sub-group.

Assume a first sub-band S₁ and one codeword sub-group N₁ within a first codeword group C₁. The index of the codeword sub-group N₁ is i₁. Then, the second codeword group C2 in the second sub-band S2 can be determined based on the index i1 of the codeword sub-group N1.

In another embodiment, a mapping relationship between the codeword index corresponding to the at least one codeword in the codeword sub-group and each codeword index in the second codeword group can be established, thereby determining the second codeword group for configuring the at least another sub-band.

The establishment of the specific mapping relationship may vary and can include fixed mapping relationships, flexibly configurable mapping relationships, among others. This embodiment may include various implementations capable of determining the second codeword group C₂ of the second sub-band S₂ through the index {i₁} of the codeword sub-group N₁, which are not limited herein.

In an embodiment, the index of a codeword can be represented as {i₁, i₂}, where the parameter i₁ may indicate the index of the codeword group or codeword sub-group to which the codeword belongs, i.e., the position of the codeword group within the codebook can be determined based on i₁, and the parameter i₂ may indicate the position of the codeword within the codeword group indicated by i₁. Therefore, the position of the codeword in the codebook can be determined based on the index {i₁, i₂}.

In the feedback method proposed in this embodiment, the codeword group corresponding to at least one another sub-band can be determined based on the codeword group corresponding to one sub-band. In some cases, the codeword group index i₁ of one sub-band can determine the codeword group index of at least another sub-band. That is, in the feedback from the terminal device side, the codewords of at least two sub-bands can share the indication information i₁ during feedback.

In the existing technology, it is not possible to determine the codeword group of one sub-band based on that of another sub-band. Each sub-band needs to separately feed back the indication information i₁ for its corresponding codeword group, which increases feedback overhead. However, by adopting the method proposed in this embodiment, the overhead can be effectively reduced.

In some applications, to address the dispersion effect of ultra-large array precoding, the larger the bandwidth of the sub-band, the larger the corresponding codeword group required, which in turn leads to an increase in the length of the i₂ indication information for the codeword, thereby increasing feedback overhead. By employing the method proposed in this embodiment, a sub-band can be divided into several lower-level sub-bands, and the codeword groups corresponding to other sub-bands can be determined based on the codeword group corresponding to at least one lower-level sub-band. Due to the division into lower-level sub-bands, the bandwidth becomes smaller, and the codeword group can also be reduced, thereby compressing the length of the i₁ indication information for codewords without increasing the i₂ indication information, achieving a reduction in feedback overhead.

In an embodiment, in the codeword index {i₁, i₂}, i₁ and i₂ may be composed of one or a set of numbers, or may be determined based on the ordering or storage structure of the codewords in the codebook. As an example, if a codebook contains 16 rows and 16 columns of codewords, then the index of a codeword can be determined based on its row number and column number in the codebook, where i₁ and i₂ may correspond to the row number and column number, respectively. As another example, a codebook can be divided into 16 codeword groups. Here, i₁=8 may indicate that the codeword belongs to the 8th codeword group, while i₂=2 may indicate that the codeword is the 2nd one within the 8th group.

In another embodiment, the codeword index may include more than three parameters, namely {i₁, i₂, i₃, ...}. For example, when the codewords in a codebook can be divided into multiple levels of codeword groups, multiple parameters are required for indexing.

In an embodiment, the index of the codeword can be directly used as feedback information. In another embodiment, the index of the codeword needs to be converted into codeword indication information according to a predetermined mapping relationship before being fed back.

FIG. 4 is a flowchart of a channel information feedback method according to an embodiment of the present disclosure. As shown in FIG. 4, step S400 further includes step S411 and step S412.

At step S411, based on a codeword index corresponding to at least one codeword in the first codeword group, a configuration parameter is determined.

At step S412, based on the configuration parameter, a second codeword group for configuring at least another sub-band is determined.

In an embodiment, the configuration parameter is a fixed configuration parameter.

Assume a codeword W₁ in the first codeword group C₁ of the first sub-band S₁. The index of codeword W₁ is {i₁, i₂}. The fixed configuration parameters are N₁ and N₂, where N₁ and N₂ can be preset integers. Then the second codeword group C₂ of the second sub-band S₂ can be determined based on the index {i₁, i₂} of the codeword W₁ and the fixed configuration parameters N₁ and N₂.

As an example, assume that the codeword index corresponding to the initial codeword (i.e., the first codeword) of the second codeword group C₂ can be {i₁+N₁, i₂+N₂}, the codeword index corresponding to the codeword in the first row and second column of the second codeword group C₂ can be {i₁+N₁, i₂+N₂+1}, the codeword index corresponding to the codeword in the second row and first column of the second codeword group C₂ can be {i₁+N₁+1, i₂+N₂}, and so on, thereby determining the codewords of the second codeword group.

As another example, the first codeword group C₁ is the codeword group used to configure the first sub-band S₁. A codeword in the first codeword C₁ is *W*_{*i*1,*i*2}, where the subscript {i₁, i₂} represents the index of the codeword *W*_{*i*1,*i*2}. Then, the codeword for the second sub-band S₂ is given by: $\left(\begin{matrix}{W}_{{i}_{1} + {N}_{1} , {i}_{2} + {N}_{2}} & {W}_{{i}_{1} + {N}_{1} , {i}_{2} + {N}_{2} + 1} & ⋯ & {W}_{{i}_{1} + {N}_{1} , {i}_{2} + {N}_{2} + {M}_{2} - 1} \\ {W}_{{i}_{1} + {N}_{1} + 1 , {i}_{2} + {N}_{2}} & {W}_{{i}_{1} + {N}_{1} + 1 , {i}_{2} + {N}_{2} + 1} & ⋯ & {W}_{{i}_{1} + {N}_{1} + 1 , {i}_{2} + {N}_{2} + {M}_{2} - 1} \\ ⋮ & ⋮ & ⋱ & ⋮ \\ {W}_{{i}_{1} + {N}_{1} + {M}_{1} - 1 , {i}_{2} + {N}_{2}} & {W}_{{i}_{1} + {N}_{1} + {M}_{1} - 1 , {i}_{2} + {N}_{2} + 1} & ⋯ & {W}_{{i}_{1} + {N}_{1} + {M}_{1} - 1 , {i}_{2} + {N}_{2} - {M}_{2} - 1}\end{matrix}\right) ,$ where N₁, N₂, M₁, and M₂ are preset integers. This example can determine the selectable codeword range for the second sub-band S₂ based on a codeword from the selectable codeword range of the first sub-band S₁.

In an embodiment, the configuration parameter is a variable configuration parameter.

Assume a codeword W₁ in the first codeword group C₁ of the first sub-band S₁. The index of codeword W₁ is {i₁, i₂}. The configurable parameters are N₁ and N₂. Then the second codeword group C₂ of the second sub-band S₂ can be determined based on the index {i₁, i₂} of codeword W₁ and the configurable parameters N₁ and N₂.

As an example, assume that the codeword index corresponding to the initial codeword (i.e., the first codeword) of the second codeword group C₂ can be {i₁+N₁, i₂+N₂}, the codeword index corresponding to the codeword in the first row and second column of the second codeword group C₂ can be {i₁+N₁, i₂+N₂+1}, the codeword index corresponding to the codeword in the second row and first column of the second codeword group C₂ can be {i₁+N₁+1, i₂+N₂}, and so on, thereby determining the codewords of the second codeword group. N₁ and N₂ can be values which differ depending on i₁ and i₂, respectively. When the selected codeword from the first codeword group C₁ in the first sub-band S₁ varies, i₁ and i₂ also change accordingly, which in turn affects the codeword selected for configuring the second codeword group.

In another embodiment, the configuration parameter may include a first configuration parameter and a second configuration parameter. The first configuration parameter is used to determine a relative offset of a starting codeword of the second codeword group relative to one codeword of the first codeword group; the second configuration parameter is used to determine the number of codewords in the second codeword group.

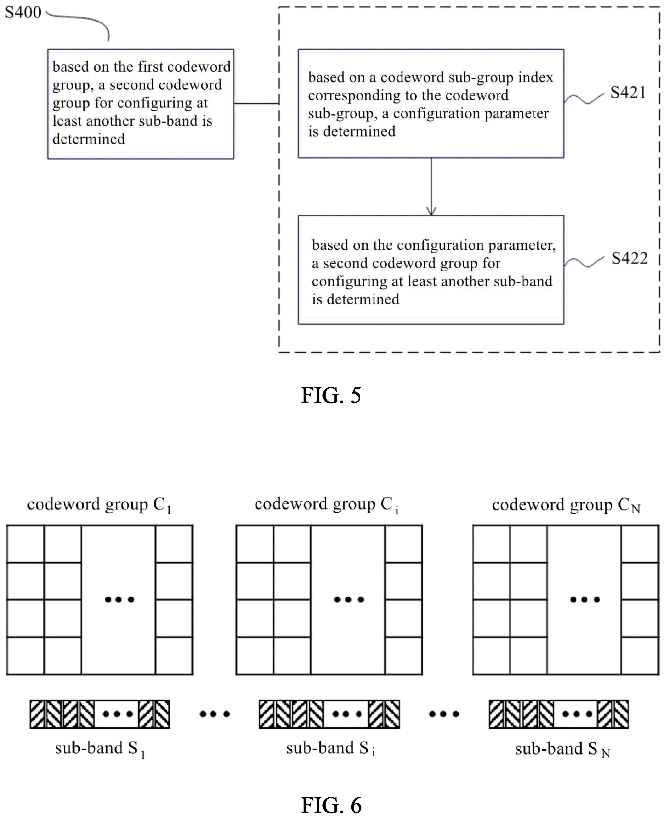

FIG. 5 is a flowchart of a channel information feedback method according to an embodiment of the present disclosure. As shown in FIG. 5, step S400 further includes step S421 and step S422.

At step S421, based on a codeword sub-group index corresponding to the codeword sub-group, a configuration parameter is determined.

At step S422, based on the configuration parameter, a second codeword group for configuring at least another sub-band is determined.

In an embodiment, the configuration parameter is a fixed configuration parameter.

Assume a codeword sub-group W₁ in the first codeword group C₁ of the first sub-band S₁. The index of the codeword sub-group W₁ is {i₁, i₂}. The fixed configuration parameters are N₁ and N₂, where N₁ and N₂ can be preset integers. Then, the second codeword group C₂ of the second sub-band S2 can be determined based on the index {i₁, i₂} of the codeword sub-group W₁ and the fixed configuration parameters N₁ and N₂.

As an example, assume that the codeword index corresponding to the initial codeword sub-group (i.e., the first codeword) of the second codeword group C₂ can be {i₁+N₁, i₂+N₂}, the codeword index corresponding to the codeword sub-group in the first row and second column of the second codeword group C₂ can be {i₁+N₁, i₂+N₂+1}, and the codeword index corresponding to the codeword sub-group in the second row and first column of the second codeword group C₂ can be {i₁+N₁+1, i₂+N₂}, and so on, thereby determining the codewords of the second codeword group. In some cases, the codeword sub-group may consist of codewords with the same beam direction but different polarization phases.

As another example, the first codeword group C₁ is a codeword sub-group W₁ used to configure the first sub-band S₁. A codeword in the first codeword C₁ is *W*_{*i*1,*i*2}, where the subscript {i₁, i₂} represents the index of the codeword *W*_{*i*1,*i*2}. Then, the codeword for the second sub-band S₂ is given by: $\left(\begin{matrix}{W}_{{i}_{1} + {N}_{1} , {i}_{2} + {N}_{2}} & {W}_{{i}_{1} + {N}_{1} , {i}_{2} + {N}_{2} + 1} & ⋯ & {W}_{{i}_{1} + {N}_{1} , {i}_{2} + {N}_{2} + {M}_{2} - 1} \\ {W}_{{i}_{1} + {N}_{1} + 1 , {i}_{2} + {N}_{2}} & {W}_{{i}_{1} + {N}_{1} + 1 , {i}_{2} + {N}_{2} + 1} & ⋯ & {W}_{{i}_{1} + {N}_{1} + 1 , {i}_{2} + {N}_{2} + {M}_{2} - 1} \\ ⋮ & ⋮ & ⋱ & ⋮ \\ {W}_{{i}_{1} + {N}_{1} + {M}_{1} - 1 , {i}_{2} + {N}_{2}} & {W}_{{i}_{1} + {N}_{1} + {M}_{1} - 1 , {i}_{2} + {N}_{2} + 1} & ⋯ & {W}_{{i}_{1} + {N}_{1} + {M}_{1} - 1 , {i}_{2} + {N}_{2} - {M}_{2} - 1}\end{matrix}\right) ,$ where N₁, N₂, M₁, and M₂ are preset integers.

In an embodiment, the configuration parameter is a variable configuration parameter.

Assume a codeword sub-group W₁ in the first codeword group C₁ of the first sub-band S₁. The index of the codeword sub-group W₁ is {i₁, i₂}, with variable configuration parameters N₁ and N₂. Then the second codeword group C₂ of the second sub-band S2 can be determined based on the index {i₁, i₂} of codeword W1 and the configurable parameters N₁ and N₂.

In an embodiment, the values of N₁ and N₂ are associated with the values of i₁ and i₂, meaning that the values of N₁ and N₂ vary according to the values of i₁ and i₂.

As an example, when {i₁, i₂} belongs to a set P1, it can be determined that N₁ and N₂ adopt a corresponding set of configuration values; when {i₁, i₂} belongs to another set P2, N₁ and N₂ need to adopt another set of configuration values. That is to say, when the codeword or codeword sub-group index {i₁, i₂} of the first sub-band takes different values, the number of codewords contained in the corresponding codeword group of the second sub-band also differs.

At step S500, a codeword corresponding to each sub-band is selected from the codeword group corresponding to the respective sub-band.

In an embodiment, based on the channel state information, a codeword corresponding to each sub-band is selected from the codeword group corresponding to the respective sub-band.

Each sub-band can obtain the channel state information of the sub-band based on the reference signal measurement results. According to the sub-band channel state information, an appropriate codeword can be selected from the corresponding codeword group for feedback. For example, the selection can be determined based on the matching degree between the codewords in the codeword group and the sub-band channel. The matching degree can be determined based on indicators such as received power and signal-to-noise ratio.

At step S600, feedback information is sent, where the feedback information includes at least codeword indication information corresponding to codewords of one sub-band.

In an embodiment, the feedback information may be codeword indication information corresponding to codewords of all the sub-bands.

In another embodiment, the feedback information may be codeword indication information corresponding to codewords of a part of sub-bands.

As an example, assume there are S₁, S₂, S₃......, Sₙ sub-bands, with corresponding codeword groups for each sub-band being C₁, C₂, C₃......, Cₙ, and corresponding codewords for each sub-band being W₁, W₂, W₃......, Wₙ, where W₁, W₂, W₃......, Wₙ are selected from C₁, C₂, C₃......, Cₙ, respectively.

The feedback information may include codeword indication information corresponding to codewords W₁, W₂, W₃, ..., Wₙ, respectively; the feedback information may also include only codeword indication information corresponding to codewords W₁, W₃, W₅, ..., W_{n'}, respectively; the feedback information may also include only codeword indication information corresponding to codewords W₂, W₄, W₆, ..., W_{n"}, respectively, where n is a positive integer, n' is odd, and n" is even.

Since the codeword group of at least one sub-band can be determined by the codeword group of another sub-band, the indication information for at least two codewords in the feedback codeword indication information can share a portion of the indication information, thereby compressing feedback overhead.

As an example, the codeword indication information for one sub-band is {i₁, i₂₁}, and the codeword indication information for another sub-band is {i₁, i₂₂}. In this case, the two codewords can share the i₁ indication information for joint feedback, meaning the indication information becomes {i₁, {i₂₁, i₂₂} }, thereby reducing one indication information overhead. For cases where multiple sub-bands share the i₁ indication information for codewords, a similar approach can be applied to reduce overhead.

In an embodiment, a sub-band may be divided into several lower-level sub-bands, such as RB groups, and each lower-level sub-band can select a codeword from a codeword set for feedback.

During the channel measurement and feedback process, the terminal device needs to select an appropriate codeword from the codebook based on the measurement results and feed it back to the base station. However, when the MIMO array antenna count is very large and the beam oversampling factor is high, the number of codewords in the codebook becomes extremely extensive, making it time-consuming to search for an appropriate codeword among the vast quantity. On the other hand, due to the influence of dispersion effects, it is difficult to transmit a wideband signal using only a single codeword. Different codewords need to be configured for different sub-bands based on the frequency-domain channel characteristics, which further increases feedback overhead and complicates codeword selection.

In this embodiment, the codeword group for at least one other sub-band is determined based on the codeword group of at least one sub-band. For example, in some cases, a mapping or functional relationship is established between the codeword groups of different sub-bands. Consequently, only the overhead required for one sub-band, along with the overhead used to represent the mapping or functions for the other sub-bands, is sufficient to represent all sub-bands. This avoids the need for corresponding codeword indication information for each sub-band, thereby reducing the required feedback overhead. At the same time, it can also simplify codeword selection and improve search efficiency.

To further elaborate on the method provided by the embodiments of the present disclosure, a detailed explanation is given through the following example.

### Example 1: a channel information feedback method

The feedback method proposed by the example includes the following steps.

### Step 1: receiving a reference signal

The reference signal may be Channel State Information Reference Signal (CSI-RS), or may be a synchronization signal such as SS, etc. The reference signal arriving at the receiver can be expressed in the following form $y = Hx + n$ (1) where x is the reference signal, H is the channel matrix, n is the noise term, and y is the received vector.

### Step 2: determining the codebook used for feedback, and determining, from the codebook, the codeword set used for configuring the sub-band

The sub-band group consists of a set of sub-carriers, for example, a sub-carrier set within a sub-bandwidth in the communication bandwidth range. A sub-band can be a BWP or a sub-carrier subset within a BWP.

To perform channel estimation, the receiver can design a reception processing matrix W to process the vector y, that is, $y ′ = Wy$ (2) where, W can be obtained using common methods such as MMSE, LMMSE, and maximum likelihood estimation. Based on the processed received vector y', the channel matrix H can be determined, thereby enabling the determination of the codeword set used for configuring at least one sub-band.

Once the codeword set for configuring one sub-band is determined, only codewords from the above-mentioned codeword set can be selected for the sub-carriers within that sub-band for beamforming configuration.

The codeword set used to configure at least one sub-band can be employed to determine the codeword set for at least one other sub-band. That is, there is a dependency relationship between the codeword sets used by different sub-bands, and based on this dependency relationship, the applicable codeword set for other sub-bands can be determined.

### Step 3: selecting the codeword from the codeword set of the sub-band

Based on the reference signal measurement results, a codeword is selected from the codeword set of each sub-band for configuring sub-band precoding.

In some cases, appropriate codewords can be determined based on the projection of the corresponding sub-carrier components of the reference signal under different codewords. In other cases, an appropriate codeword can be determined based on the received power or signal-to-noise ratio of the sub-carrier signal.

### Step 4: sending feedback information, i.e., feeding back the indication information of the selected codeword

After the terminal device determining the sub-band codeword based on the reference signal measurement results and the sub-band codeword group configuration information, the terminal device feeds back the codeword indication information and codeword configuration information to the base station. Based on the feedback information, the base station configures the precoding for the MIMO array to be used in beamforming of the MIMO array during downlink communication.

In this example, the codeword group for another sub-band is determined based on the codeword group of one sub-band, thereby enabling the representation of all sub-bands with reduced overhead. This avoids the need for corresponding codeword indication information for each sub-band, reduces the required feedback overhead, and also simplifies codeword selection, improving search efficiency.

### Example 2: structure of codeword

In an example, the codewords in the codebook satisfy the following form: ${W}_{l , m , n} = \frac{1}{\sqrt{{P}_{CSI - RS}}} \left[\begin{matrix}{ν}_{l , m} \\ {φ}_{m} {ν}_{l , m}\end{matrix}\right]$ (4) where, ${φ}_{n} = {e}^{jπn / 2}$ (5) ${u}_{m} = \left\{\begin{matrix}\left[1 {e}^{j \frac{2 πm}{{O}_{2} {N}_{2}}} ⋯ j\frac{2 πm \left({N}_{2}-1\right)}{{O}_{2} {N}_{2}}\right] & {N}_{2} > 1 \\ 1 & {N}_{2} = 1\end{matrix}\right.$ (6) ${ν}_{l , m} = {\left[{u}_{m} {e}^{j \frac{2 πl}{{O}_{1} {N}_{1}}}{u}_{m} ⋯ {e}^{j \frac{2 πl \left({N}_{1}-1\right)}{{O}_{1} {N}_{1}}} {u}_{m}\right]}^{T}$ (7) where the index {l, m, n} of the codeword can be determined based on the codeword indication information {*i*₁₁*,i*₁₂,*i*₂}, and *i*₁₁ ∈ {0, 1, ··· *N*₁*O*₁ / *s*₁ - 1}, *i*₁₂ ∈ {0, 1, ··· *N*₂*O*₂ / *s*₂ - 1} , N₁, N₂, O₁, O₂, s₁, s₂ are preset parameters.

In some cases, n may be used to indicate polarization phase information. The range of n can be determined according to the actual situation; for example, in some cases, n may be an integer value between 0 and 3.

As can be seen from formula (4), the codeword *W*_{*l*,*m*,*n*} belongs to a codeword group **W**_{*l*,*m*}.

In some cases, the codeword indication information {i₁₁, i₁₂} can indicate a codeword sub-group within the codebook. The indication information i₂ further indicates the position of the selected codeword within that codeword sub-group. For example, {i₁, i₂} can indicate the starting or ending position of a codeword group in one continuous region of the codebook.

In some cases, a sub-band needs to be selected from 16 beams. If there are 4 polarization conditions, the codeword group used to configure this sub-band contains 64 codewords. In this scenario, i₂ requires at least 6 bits to fully feedback the codeword information.

By adopting the feedback method proposed in the embodiments/examples of the present disclosure, the length of the indication information i₂ can be effectively compressed. On one hand, the sub-band can be divided into several lower-level sub-bands (secondary sub-bands), which weakens the dispersion effect, thereby allowing compression of the required number of beams, for example, down to 4, thus reducing the number of codewords used for configuring the lower-level sub-bands to 16. The length of the indication information i₂ can be compressed to 4 bits. On the other hand, since the codeword set of at least one lower-level sub-band can be determined, the codeword set of at least another lower-level sub-band can also be determined. Therefore, an increase in the number of lower-level sub-bands does not require additional indication information, meaning that the indication information {i₁₁, i₁₂} may not need to be increased or only needs to be increased minimally, thereby effectively compressing the feedback length of the indication information.

In some cases, a codeword in multi-layer transmission can be expressed as follows: ${W}_{{l}_{11} {l}_{12} , ⋯ , {l}_{TK} , {m}_{11} , {m}_{12} , ⋯ , {m}_{TK} , {n}_{21} , {n}_{22} , {n}_{TK}} = \frac{1}{\sqrt{{KP}_{CSI - RS}}} \left[\begin{matrix}{ν}_{{l}_{11} , {m}_{11}} & {ν}_{{l}_{12} , {m}_{12}} & ⋯ & {ν}_{{l}_{1 K} , {m}_{1 K}} \\ {φ}_{{n}_{21}} {ν}_{{l}_{21} , {m}_{21}} & {φ}_{{n}_{22}} {ν}_{{l}_{22} , {m}_{22}} & ⋯ & {φ}_{{n}_{2 K}} {ν}_{{l}_{2 K} , {m}_{2 K}} \\ ⋮ & ⋮ & ⋱ & ⋮ \\ {φ}_{{n}_{T 1}} {ν}_{{l}_{T 1} , {m}_{T 1}} & {φ}_{{n}_{T 1}} {ν}_{{l}_{T 2} , {m}_{T 2}} & ⋯ & {φ}_{{n}_{TK}} {ν}_{{l}_{TK} , {m}_{TK}}\end{matrix}\right]$ (7) where v_{l,m} is determined by formula (7), *φₙ* is determined by formula (5), K is the number of transmission layers, and PCSI-RS is the number of ports. At this point, a codeword needs more indication information to be determined, and the indication information of the codeword corresponds one-to-one with the index of the codeword.

The channel measurement and feedback method proposed in the embodiments/examples of the present disclosure can still determine the codeword group for at least one other sub-band based on the codeword group of at least one sub-band across different sub-bands for the codebook composed of the aforementioned codewords. Therefore, the codeword group information for multiple sub-bands can be determined with fewer indication bits in the feedback information.

### Example 3: fixed configuration being adopted between codeword groups

To better utilize frequency domain resources, a communication bandwidth is generally divided into multiple sub-bands. A sub-band can be a set of sub-carriers, such as being composed of several sub-bands within a segment of continuous bandwidth. FIG. 6 is a schematic diagram illustrating the relationship between sub-bands and codeword groups according to an embodiment of the present disclosure. As shown in FIG. 6, the sub-band may be a serving cell, a BWP, an RB group within a BWP, a sub-carrier group within a BWP, and the like.

During the channel measurement and feedback process, the terminal device needs to select an appropriate codeword from the codebook based on the measurement results and feed it back to the base station. On one hand, when the MIMO array antenna count is large and the beam oversampling factor is high, the number of codewords in the codebook becomes extremely extensive, therefore it is time-consuming to search for an appropriate codeword among the vast quantity. On the other hand, due to the effects of dispersion, it is challenging to transmit a wideband signal using only a single codeword. It is necessary to configure different codewords for different sub-bands based on the frequency-domain channel characteristics, which will further increase the complexity of codeword selection.

To enhance efficiency, a codeword set can be determined for different sub-bands based on the measurement results of reference signals. The corresponding sub-band can only select codewords from this codeword group, thereby compressing the codeword search range and improving search efficiency. For example, sub-carriers in sub-band S₁ can only select codewords from codeword group C₁.

However, when the dispersion effect is significant, the frequency-domain channels within a sub-band may also exhibit substantial fluctuations. In this case, to ensure wideband transmission performance, it becomes necessary to design a relatively large codeword set. The increase in the codeword size, on one hand, raises the difficulty of code word search, and on the other hand, also increases the feedback overhead.

To address the aforementioned issues, this example proposes a channel measurement and feedback method, which includes determining the codeword group of at least one other sub-band based on the codeword group of at least one sub-band. In some cases, there is an explicit functional relationship between the codeword groups of different sub-bands. ${{\left\{{C}_{l}, {C}_{m}, ⋯, {C}_{n}\right\}}_{︸}}_{{K}_{1}} = f {{\left\{{C}_{i}, {C}_{j}, ⋯, {C}_{k}\right\}}_{︸}}_{{K}_{2}}$ (3)

In the above formula, K₁ codeword groups can be determined from another K₂ codeword groups in the codebook according to the function f, where K₁ ≥ 1, K₂ ≥ 1. Based on this mapping relationship, feedback overhead can be reduced during the channel information feedback process.

A codeword group contains several codewords, and each codeword corresponds to a codeword index. The codeword index can be a combination of a set of numbers or other identifiers, and one codeword index can indicate the position of a codeword in a preset codebook.

In some applications, the codeword set Cᵢ for a sub-band Sᵢ contains a codeword *W*_{*i*1,*i*2}. Based on the index {i₁, i₂} of this codeword, the codeword group Cⱼ of the sub-band Sⱼ can be determined. For example, in some cases, the Cⱼ codeword set consists of the following codewords determined by {i₁, i₂} $\left(\begin{matrix}{W}_{{i}_{1} + {N}_{1} , {i}_{2} + {N}_{2}} & {W}_{{i}_{1} + {N}_{1} , {i}_{2} + {N}_{2} + 1} & ⋯ & {W}_{{i}_{1} + {N}_{1} , {i}_{2} + {N}_{2} + {M}_{2} - 1} \\ {W}_{{i}_{1} + {N}_{1} + 1 , {i}_{2} + {N}_{2}} & {W}_{{i}_{1} + {N}_{1} + 1 , {i}_{2} + {N}_{2} + 1} & ⋯ & {W}_{{i}_{1} + {N}_{1} + 1 , {i}_{2} + {N}_{2} + {M}_{2} - 1} \\ ⋮ & ⋮ & ⋱ & ⋮ \\ {W}_{{i}_{1} + {N}_{1} + {M}_{1} - 1 , {i}_{2} + {N}_{2}} & {W}_{{i}_{1} + {N}_{1} + {M}_{1} - 1 , {i}_{2} + {N}_{2} + 1} & ⋯ & {W}_{{i}_{1} + {N}_{1} + {M}_{1} - 1 , {i}_{2} + {N}_{2} - {M}_{2} - 1}\end{matrix}\right)$ where, N₁, N₂, M₁, and M₂ are preset integers. At this point, the index {j₁, j₂} of the codeword in row m₁ and column m₂ of Cⱼ has the following functional relationship with {i₁, i₂}: ${j}_{1} = {i}_{1} + {N}_{1} + {m}_{1} ,$ ${j}_{2} = {i}_{2} + {N}_{2} + {m}_{2} ,$ where *m*₁ ∈ [0, *M*₁], *m*₂ ∈ [0, *M*₂]. Based on the above relationships, by simply presetting N₁, N₂, M₁, and M₂, multiple other codeword groups can be determined from the codeword group Cᵢ, with each codeword group used for codeword selection within a sub-band.

In some other cases, N₁ and N₂ can be used to configure the relative offset of the starting codeword in codeword group Cⱼ relative to the codeword in codeword group Cᵢ within the codebook, while M₁ and M₂ can be used to configure the number of codewords in codeword group Cⱼ.

In some other cases, different codeword groups can be configured with different N₁, N₂, M₁, and M₂ parameters.

In some applications, the codeword group Cᵢ for a sub-band Sᵢ includes a codeword sub-group **W**_{*i*1,*i*2}, where the index {i₁, i₂} indicate the position of this codeword group within a preset codebook. Therefore, based on the index {i₁, i₂}, the codeword group Cⱼ for sub-band Sⱼ can be determined. For example, in some cases, the codeword group Cⱼ is composed of the following codeword sub-groups, $\left(\begin{matrix}{W}_{{i}_{1} + {N}_{1} , {i}_{2} + {N}_{2}} & {W}_{{i}_{1} + {N}_{1} , {i}_{2} + {N}_{2} + 1} & ⋯ & {W}_{{i}_{1} + {N}_{1} , {i}_{2} + {N}_{2} + {M}_{2} - 1} \\ {W}_{{i}_{1} + {N}_{1} + 1 , {i}_{2} + {N}_{2}} & {W}_{{i}_{1} + {N}_{1} + 1 , {i}_{2} + {N}_{2} + 1} & ⋯ & {W}_{{i}_{1} + {N}_{1} + 1 , {i}_{2} + {N}_{2} + {M}_{2} - 1} \\ ⋮ & ⋮ & ⋱ & ⋮ \\ {W}_{{i}_{1} + {N}_{1} + {M}_{1} - 1 , {i}_{2} + {N}_{2}} & {W}_{{i}_{1} + {N}_{1} + {M}_{1} - 1 , {i}_{2} + {N}_{2} + 1} & ⋯ & {W}_{{i}_{1} + {N}_{1} + {M}_{1} - 1 , {i}_{2} + {N}_{2} - {M}_{2} - 1}\end{matrix}\right)$ where N₁, N₂, M₁, and M2 are preset integers, the above-mentioned preset values can be determined by configuration signaling sent by the base station or determined by the terminal device according to preset rules.

At this point, the index {j₁, j₂} of the codeword sub-group in the m₁-th row and m₂-th column of Cⱼ has the following functional relationship with {i₁, i₂}: ${j}_{1} = {i}_{1} + {N}_{1} + {m}_{1} ,$ ${j}_{2} = {i}_{2} + {N}_{2} + {m}_{2} ,$ where *m*₁ ∈ [0, *M*₁], *m*₂ ∈ [0, *M*₂]. Based on the above relationships, by simply presetting N₁, N₂, M₁, and M₂, multiple other codeword groups can be determined from the codeword group Cᵢ, with each codeword group used for codeword selection within a sub-band.

### Example 4: fixed configuration being adopted between codeword groups

In an example, the terminal device can determine a codeword group for configuring at least another sub-band based on a codeword group for configuring at least one sub-band. For the same sub-band, when the codeword group of at least one sub-band changes, the codeword group of at least another sub-band determined based on that codeword group needs to be changed accordingly. The change may include the number of codewords in the codeword group, the position of the starting codeword in the codeword group, etc.

For example, based on the index information {i₁, i₂} of a codeword in the codeword group Cᵢ used to configure a sub-band Sᵢ, the configuration parameters {N₁, N₂, M₁, M₂} for the codeword group of another sub-band Sⱼ can be determined. Based on the index information {i₁, i₂} and the determined set of configuration parameters {N₁, N₂, M₁, M₂}, the codeword group Cⱼ used to configure sub-band Sⱼ can be determined as $\left(\begin{matrix}{W}_{{i}_{1} + {N}_{1} , {i}_{2} + {N}_{2}} & {W}_{{i}_{1} + {N}_{1} , {i}_{2} + {N}_{2} + 1} & ⋯ & {W}_{{i}_{1} + {N}_{1} , {i}_{2} + {N}_{2} + {M}_{2} - 1} \\ {W}_{{i}_{1} + {N}_{1} + 1 , {i}_{2} + {N}_{2}} & {W}_{{i}_{1} + {N}_{1} + 1 , {i}_{2} + {N}_{2} + 1} & ⋯ & {W}_{{i}_{1} + {N}_{1} + 1 , {i}_{2} + {N}_{2} + {M}_{2} - 1} \\ ⋮ & ⋮ & ⋱ & ⋮ \\ {W}_{{i}_{1} + {N}_{1} + {M}_{1} - 1 , {i}_{2} + {N}_{2}} & {W}_{{i}_{1} + {N}_{1} + {M}_{1} - 1 , {i}_{2} + {N}_{2} + 1} & ⋯ & {W}_{{i}_{1} + {N}_{1} + {M}_{1} - 1 , {i}_{2} + {N}_{2} - {M}_{2} - 1}\end{matrix}\right) .$

In some cases, N₁ and N₂ can be used to configure the relative offset of the starting codeword of codeword group Cⱼ with respect to the codeword *W*_{*i*1,*i*2} in codeword group Cᵢ, while M₁ and M₂ can be used to configure the number of codewords in codeword group Cⱼ. When at least one codeword in the codeword group used to configure sub-band Sᵢ changes, that is, when the values of {i₁, i₂} change, the configuration parameters {N₁, N₂, M₁, M₂} for the codeword group of sub-band Sⱼ will change accordingly. This, in turn, alters the number of codewords in codeword group Cⱼ used to configure sub-band Sⱼ and the position of the starting codeword within the preset codebook.

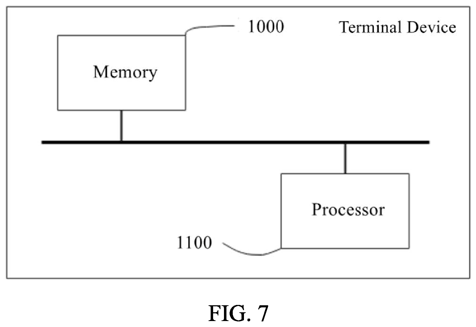

FIG. 7 is a schematic diagram illustrating a terminal device according to an embodiment of the present disclosure. As shown in FIG. 7, it includes: a memory 1000, a processor 1100, and computer programs stored in the memory 1000 and can run on the processor 1100. When the processor 1100 executes the computer programs, the codebook configuration method provided by any embodiment of the present disclosure is implemented.

An embodiment of the present disclosure further provides a computer-readable storage medium storing computer-executable instructions, which are used to execute the method provided in any embodiment of the present disclosure.

An embodiment of the present disclosure further provides a computer program product including a computer program or computer instructions, which are used to execute a method as provided in any embodiment of the present disclosure.

The system architecture and application scenarios described in the embodiments of the present disclosure are intended to more clearly illustrate the technical schemes of the embodiments of the present disclosure and do not constitute limitations on the technical schemes provided in the embodiments of the present disclosure. Those skilled in the art will appreciate that, with the evolution of system architectures and the emergence of new application scenarios, the technical schemes provided in the embodiments of the present disclosure are equally applicable to similar technical problems.

Those of ordinary skill in the art will understand that all or some of the steps in the methods disclosed above, as well as the functional modules/units in the systems and devices, can be implemented as software, firmware, hardware, and appropriate combinations thereof.

In hardware implementations, the division between functional modules/units mentioned in the above description does not necessarily correspond to the division of physical components; for example, one physical component may have multiple functions, or one function or step may be performed collaboratively by several physical components. Some physical components or all physical components may be implemented as software executed by a processor, such as a central processing unit, digital signal processor, or microprocessor, or as hardware, or as an integrated circuit, such as an application-specific integrated circuit. Such software may be distributed over computer-readable media, which may include computer storage media (or non-transitory media) and communication media (or transitory media). As will be well understood by those of ordinary skill in the art, the term computer storage media encompasses volatile and nonvolatile, removable and non-removable media implemented in any method or technology for storing information, such as computer-readable instructions, data structures, program modules, or other data. Computer storage media include, but are not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and accessed by a computer. Moreover, it is well known to those of ordinary skill in the art that communication media typically embody computer-readable instructions, data structures, program modules, or other data in a modulated data signal such as a carrier wave or other transport mechanism, and include any information delivery media.

The terms "component," "module," "system," and the like used in this specification are intended to refer to a computer-related entity, either hardware, firmware, a combination of hardware and software, software, or software in execution. For example, a component may be, but is not limited to, a process running on a processor, a processor, an object, an executable, an execution thread, a program, or a computer. As illustrated, both an application running on a computing device and the computing device itself can be components. One or more components may reside within a process or execution thread, and a component may be located on one computer or distributed across two or more computers. Furthermore, these components may be executed from various computer-readable media storing diverse data structures. Components may, for example, communicate via local or remote processes in accordance with signals including one or more data packets (e.g., data from two components interacting with another component in a local system, distributed system, or across a network, such as the Internet interacting with other systems via signals).

Some embodiments of the present disclosure have been described above with reference to the accompanying drawings, which are not intended to limit the scope of rights of the present disclosure. Any changes, equivalent substitutions, and improvements made by professionals in this field without going beyond the scope and essence of this application should all fall within the rights of this application.

## Claims

1. A channel information feedback method, comprising:
receiving a reference signal;
measuring the reference signal to obtain channel state information;
determining, based on the channel state information, a first codeword group from a codebook for configuring a sub-band;
determining, based on the first codeword group, a second codeword group for configuring at least another sub-band;
selecting a codeword corresponding to each sub-band from the codeword group corresponding to the respective sub-band; and
sending feedback information, wherein the feedback information comprises at least codeword indication information corresponding to a codeword of one sub-band.

2. The feedback method according to claim 1, wherein selecting a codeword corresponding to each sub-band from the codeword group corresponding to the respective sub-band comprises:
selecting, based on the channel state information, a codeword corresponding to each sub-band from the codeword group corresponding to the respective sub-band.

3. The feedback method according to claim 1 or 2, wherein determining a second codeword group for configuring at least another sub-band based on the first codeword group comprises:
determining, based on a codeword index corresponding to at least one codeword in the first codeword group, a second codeword group for configuring at least another sub-band.

4. The feedback method according to claim 1 or 2, wherein:
the first codeword group comprises at least one codeword sub-group; and
determining, based on the first codeword group, a second codeword group for configuring at least another sub-band comprises:
determining, based on a codeword sub-group index corresponding to the codeword sub-group, a second codeword group for configuring at least another sub-band.

5. The feedback method according to claim 3, wherein determining, based on a codeword index corresponding to at least one codeword in the first codeword group, a second codeword group for configuring at least another sub-band comprises:
determining, based on a codeword index corresponding to at least one codeword in the first codeword group, a configuration parameter; and
determining, based on the configuration parameter, a second codeword group for configuring at least another sub-band.

6. The feedback method according to claim 4, wherein determining, based on a codeword sub-group index corresponding to the codeword sub-group, a second codeword group for configuring at least another sub-band comprises:
determining, based on a codeword sub-group index corresponding to the codeword sub-group, a configuration parameter; and
determining, based on the configuration parameter, a second codeword group for configuring at least another sub-band.

7. The feedback method according to claim 5 or 6, wherein the feedback information further comprises configuration indication information corresponding to the configuration parameter.

8. The feedback method according to claim 1, wherein the sub-band is any one of the following:
one bandwidth part (BWP);
at least one resource block (RB) of one bandwidth part (BWP); or
a set of at least one sub-carrier of one bandwidth part (BWP).

9. The feedback method according to claim 5 or 6, wherein:
the configuration parameter comprises a first configuration parameter and a second configuration parameter;
the first configuration parameter is configured to determine a relative offset of a starting codeword of the second codeword group relative to at least one codeword of the first codeword group; and
the second configuration parameter is configured to determine a number of codewords in the second codeword group.

10. The feedback method according to claim 3, wherein determining, based on a codeword index corresponding to at least one codeword in the first codeword group, a second codeword group for configuring at least another sub-band comprises:
establishing a mapping relationship between the codeword index corresponding to the at least one codeword in the first codeword group and each codeword index in the second codeword group, to determine the second codeword group for configuring the at least another sub-band.

11. The feedback method according to claim 4, wherein determining, based on a codeword sub-group index corresponding to the codeword sub-group, a second codeword group for configuring at least another sub-band comprises:
establishing a mapping relationship between the codeword index corresponding to the at least one codeword in the first codeword group and each codeword index in the second codeword group, to determine the second codeword group for configuring the at least another sub-band.

12. A terminal device, comprising:
at least one processor; and
at least one memory, configured to store at least one program;
wherein the channel information feedback method according to any one of claims 1 to 11 is implemented when the at least one program is executed by the at least one processor.

13. A computer-readable storage medium, on which a processor-executable program is stored, and the channel information feedback method according to any one of claims 1 to 11 is implemented when the processor-executable program is executed by a processor.

14. A computer program product, comprising a computer program or computer instructions, wherein the computer program or the computer instructions are stored in a computer-readable storage medium, a processor of a computer device reads the computer program or the computer instructions from the computer-readable storage medium, and the processor executes the computer program or the computer instructions, causing the computer device to perform the channel information feedback method according to any one of claims 1 to 11.
